(19) **Europäisches Patentamt**

**European Patent Office**

**Office européen des brevets**

(11) Veröffentlichungsnummer: **0 096 262**
**B1**

(12) # EUROPÄISCHE PATENTSCHRIFT

(45) Veröffentlichungstag der Patentschrift:
03.08.88

(51) Int. Cl.⁴: **G 01 D  5/26,** G 02 B  6/00

(21) Anmeldenummer: **83104981.2**

(22) Anmeldetag: **19.05.83**

(54) **Faseroptischer Sensor zur Messung von dynamischen Grössen.**

(30) Priorität: **27.05.82  SE 8203296**

(43) Veröffentlichungstag der Anmeldung:
**21.12.83 Patentblatt 83/51**

(45) Bekanntmachung des Hinweises auf die Patenterteilung:
**03.08.88 Patentblatt 88/31**

(84) Benannte Vertragsstaaten:
**CH DE FR GB LI**

(56) Entgegenhaltungen:
**EP - A - 0 005 798**
**EP - A - 0 025 566**
**DE - A - 2 849 186**
**DE - A - 2 945 019**
**DE - A - 3 036 682**
**DE - A - 3 047 343**
**SE - B - 7 801 965**
**SE - B - 7 803 086**
**US - A - 4 270 050**
**US - A - 4 322 979**

**Die Akte enthält technische Angaben, die nach dem Eingang der Anmeldung eingereicht wurden und die nicht in dieser Patentschrift enthalten sind.**

(73) Patentinhaber: **ASEA AB, S-721 83 Västeras (SE)**

(72) Erfinder: **Brogardh, Torgny, Platverksgatan 140,**
**S-724 74 Västeras (SE)**
Erfinder: **Hök, Bertil, Sportfiskargatan 53,**
**S-723 48 Västeras (SE)**
Erfinder: **Ovrén, Christer, Vilddjursvägen 9,**
**S-722 43 Västeras (SE)**

(74) Vertreter: **Boecker, Joachim, Dr.-Ing.,**
**Rathenauplatz 2-8, D-6000 Frankfurt a.M. 1 (DE)**

## Beschreibung

Die vorliegende Erfindung betrifft einen faseroptischen Sensor zur Messung von Bewegungen gemäss dem Oberbegriff des Anspruches 1. Ein solcher Sensor ist bekannt aus Figur 3 der DE-A-3 047 343.

Bekannte faseroptische Sensoren zum Messen von dynamischen Bewegungen in Messanordnungen mit einer einfachen Faser erfordern ein genaues Einpassen von komplizierten feinmechanischen Elementen und haben bei der Ausnutzung der Fotolumineszenz nur einen begrenzten dynamischen Messbereich. Solche faseroptischen Geber sind bekannt aus der DE-A-2 849 186, den SE-PSen 410 521, 413 344 und 413 205, der EP-A-0 005 798, der DE-A-2 945 019 und der DE-A-3 047 343.

Bei diesen bekannten Sensoren kann mindestens eines der folgenden Probleme bzw. einer der folgenden Nachteile auftreten:

1. Die Anordnung benötigt zwei oder mehr Fasern zur Speisung der Messstelle und zur Signalrückführung.

2. Aufgrund sich verändernder Reflexionen an den Grenzflächen zwischen Glas und Luft können in der Anordnung keine Kontaktvorrichtungen zur Verbindung optischer Fasern verwendet werden.

3. Der Sensor besteht aus einer Vielzahl von mechanischen Komponenten, die bei der Montage mit grosser Präzision ineinandergepresst werden müssen.

4. Der dynamische Bereich (Verhältnis von Nutzsignal zu Störpegel) des Sensors sind gering.

Aus der US-A-4 322 979 ist ein Manometer bekannt, bei dem das Medium, dessen Druck zu messen ist, auf eine Membran wirkt, die auf der druckabgewandten Seite ein erstes Prisma trägt. Ein zweites Prisma ist stationär angeordnet und liegt mit einer Fläche parallel zu einer Fläche des erstgenannten Prismas. Entsprechend der Durchbiegung der Membran ändert sich der durch das zweite Prisma hindurchgeleitete Anteil einer Lichtmenge, die diesem Prisma zugeführt wird.

Die US-A-4 270 050 beschreibt einen faseroptischen Sensor zur Messung einer auf den Modulator des Sensors wirkenden Kraft. Die Messgrösse wird dadurch gewonnen, dass sich das Reflexionsspektrum des Modulators druck- oder zugabhängig verändert. Dadurch wird der Anteil des vom Modulator reflektierten Lichtes entsprechend verändert. Der Modulator ist im Verhältnis zur optischen Faser entweder starr angeordnet oder er hat keine mechanische Verbindung mit der Faser.

Bei dem aus Figur 3 der DE-A-3 047 343 bekannten faseroptischen Sensor findet eine Relativbewegung zwischen dem Faserende und einem beispielsweise als Spiegel ausgebildeten Körper statt, der mit seiner Spiegelfläche senkrecht zur Längsrichtung der Faser angeordnet ist und sich senkrecht zur Längsrichtung der Faser in Abhängigkeit der Messgrösse verschiebt. Das Faserende ist dabei mit einem fotolumineszierenden Material belegt. Bei einem anderen, aus Figur 11 der DE-A-3 047 343 bekannten Sensor sind vor dem Ende der Faser zwei senkrecht zur Längsrichtung der Faser seitlich versetzte Körper angeordnet, von denen jeder mit zwei unterschiedlich lumineszenzfähigen Materialien belegt ist, wobei die Zusammenstellung der beiden Materialien für beide Körper die gleiche ist. Das Faserende wird in Abhängigkeit der Messgrösse in Biegeschwingungen versetzt, so dass das Faserende mehr oder weniger stark abwechselnd vor die beiden Körper gelangt und Anregungslicht auf diese überträgt sowie von den Körpern ausgehendes Lumineszenzlicht aufnimmt. Durch Vergleich der beiden Fotolumineszenzlichtkomponenten kann die Stärke der Schwingung der Faser und damit der Wert der zu messenden physikalischen Grösse bestimmt werden. Im Ruhezustand des Sensors verlaufen die lumineszierenden Grenzflächen der beiden Körper senkrecht zur Längsrichtung der Faser. Durch die Ausbildung des Messsystems in der Weise, dass das Messsignal aus einer bestimmten Beziehung zwischen zwei Signalen, beispielsweise dem Quotienten aus zwei Signalen, gebildet wird, wird erreicht, dass das Messergebnis unabhängig von Dämpfungen im Fasersystem ist, die beispielsweise durch Biegungen im Verlauf der Fasern auftreten.

Der Erfindung liegt die Aufgabe zugrunde, einen Sensor der eingangs genannten Art zu entwickeln, bei dem die vorstehend genannten Probleme nicht auftreten, der also von den genannten Nachteilen frei ist.

Zur Lösung dieser Aufgabe wird ein Sensor gemäss dem Oberbegriff des Anspruches 1 vorgeschlagen, der erfindungsgemäss die im kennzeichnenden Teil des Anspruches 1 genannten Merkmale hat.

Vorteilhafte Ausgestaltungen der Erfindung sind in den weiteren Ansprüchen 2 bis 14 genannt.

Indem man die von einem beweglichen Körper reflektierte optische Energie, die Fotolumineszenz und die Verwendung eines elastischen Teils kombinierend ausnutzt, ist es möglich, dieselbe Faser sowohl für die Zuführung der optischen Energie zum Sensor als auch für die Rückführung des vom Sensor gelieferten Signals zu verwenden. Die Verwendung des Reflexionssignals führt zu einem grossen Verhältnis des Nutzsignals zum Störpegel, während gleichzeitig das durch Fotolumineszenz gewonnene Signal dazu benutzt wird, die Variationen der Lichtdämpfung im Übertragungsweg zu kompensieren, so dass das Messergebnis von sich ändernden Reflexionen an Grenzflächen, beispielsweise an Faserverbindungen, unabhängig ist. Zweckmässigerweise wird der bewegliche Körper unter Ausnutzung der Halbleitertechnologie hergestellt, wodurch man hohe Präzision bei niedrigen Preisen erhält. Durch die Befestigung des elastischen Teils und der sich im Verhältnis zum Faserende bewegenden Grenzfläche am Faserende selbst erhält man ein zusammenhängendes Gebilde, das einfach und praktisch herzustellen und zu handhaben ist.

Durch Verwendung eines Reflexionssignals von der sich bewegenden Grenzfläche in Kombination mit einem Regelkreis, der von einem Lumineszenzsignal gesteuert wird, erhält man ein hohes Signalniveau und zugleich eine Unempfindlichkeit des Signals gegenüber Verlusten und Reflexionen an Verbindungsstellen und in Verzweigungsstellen. Halbleitermaterial mit anpassbaren optischen und chemischen Eigenschaften ermöglicht es, durch Fotolithografie und Ätztechnik bei geringen Kosten integrierte mechanische und optische Strukturen herzustellen.

Anhand der in den Figuren gezeigten Ausführungsbeispiele soll die Erfindung näher erläutert werden. Es zeigen

Figur 1 den Aufbau einer Messanordnung zur Erläuterung der Arbeitsweise eines Sensors nach der Erfindung,

Figur 2 in detaillierter Darstellung ein Ausführungsbeispiel für den eigentlichen Sensor nach der Erfindung.

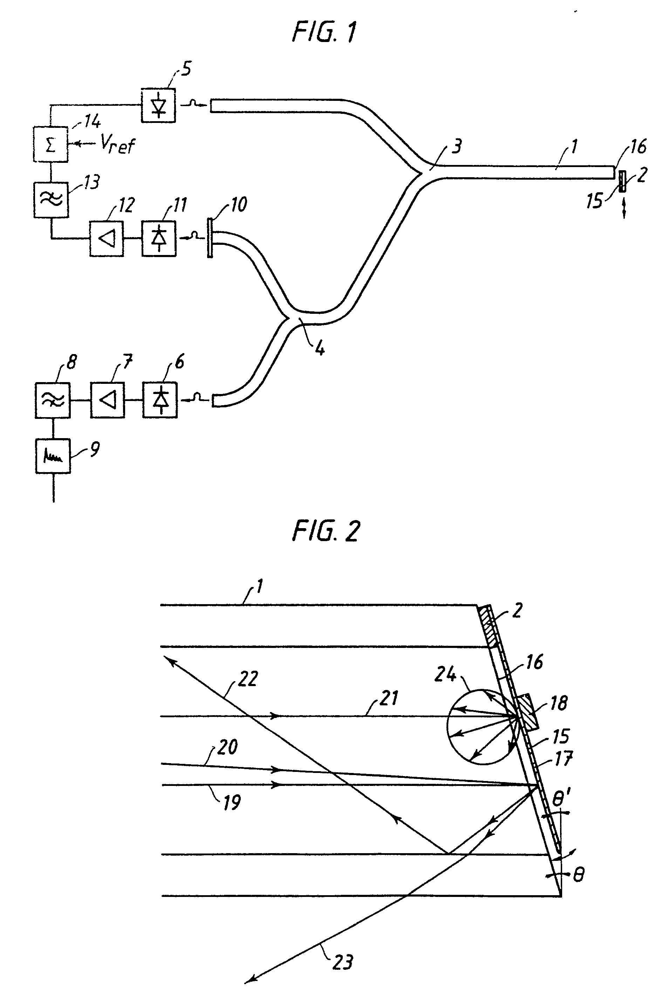

Figur 1 zeigt die prinzipielle Arbeitsweise einer Messanordnung, bei der ein Sensor nach der Erfindung eingesetzt werden kann:

Eine Leuchtdiode 5 sendet Licht über eine Faserverzweigung 3 in die optische Faser 1. An den Grenzflächen 15 und 16 findet eine Reflexion und eine Fotolumineszenz, die durch das von der Leuchtdiode 5 kommende Licht angeregt wird, statt. Das Reflexionslicht und in gewissen Fällen auch das Fotolumineszenzlicht ist von der relativen Lage zwischen den Grenzflächen 15, 16 abhängig. Das insgesamt zurückgeleitete Licht wird nach Passage der Faserverzweigung 3 und einer weiteren Faserverzweigung 4 auf zwei Messkanäle aufgeteilt. In dem einen Messkanal befindet sich ein optisches Filter 10, welches das Reflexionslicht von dem Fotolumineszenzlicht trennt. Es kann sich dabei um ein Kantenfilter oder ein Bandpassfilter handeln, das beispielsweise die Interferenz in dünnen Schichten ausnutzt. Der Messkanal für das Reflexionslicht benötigt in vielen Fällen kein optisches Filter, da das Fotolumineszenzlicht in typischen Fällen nur ca. $1/1000$ des gesamten Lichtes beträgt.

In den beiden Messkanälen werden die Signale mit Hilfe von Fotodioden 6, 11 in elektrischen Strom umgewandelt, und in den Verstärkern 7, 12 werden die Signale auf geeignete Spannungswerte verstärkt. Das Reflexionssignal passiert ein Hochpassfilter 8, wobei der Einfluss von statischen Reflexionen, die in der Messanordnung, beispielsweise in den Faserverzweigungen oder an Faserverbindungen auftreten, unschädlich gemacht wird. Gleichzeitig bedeutet dies, dass der Sensor bei sehr langsamen Lageveränderungen zwischen den Grenzflächen 15 und 16 kein messbares Signal liefert. Das Ausgangssignal des Hochpassfilters 8 wird ferner einem Glied 9 zur weiteren Signalverarbeitung und/oder zur Anzeige zugeführt. Der Fotolumineszenzkanal bildet zusammen mit der Leuchtdiode 5, dem Filter 13 und dem Soll-Istwertvergleicher 14 einen geschlossenen Regelkreis, durch den das Anregungslicht entsprechend bekannter Technik auf ein konstantes Fotolumineszenzsignal geregelt wird. Da sowohl das von den Grenzflächen 15, 16 ausgehende Reflexionslicht als auch das Fotolumineszenzlicht dem auf die Grenzflächen auftreffenden Anregungslicht linear proportional sind und die Signalwege identisch sind, erhält man eine sehr gute Kompensation der variierenden Lichtverluste längs des Signalweges.

Eine hinsichtlich ihrer Kompensationsfähigkeit etwa gleichwertige Abwandlung ist die Konstanthaltung des Anregungslichts in Kombination mit elektrischer Weiterverarbeitung der Signale der beiden Messkanäle.

Um Probleme durch den Dunkelstrom der Fotodioden oder durch Störlicht zu vermeiden, kann ein gepulster Betrieb der Leuchtdiode in Kombination mit phasengebundenen Verstärkern 7, 12 angewendet werden.

Figur 2 zeigt ein Ausführungsbeispiel des Endabschnittes der Faser 1 genauer. Die Ausführungsform enthält einen Beschleunigungsmesser, wobei der Körper 2 fest an der die Grenzfläche 16 bildenden Faserendfläche angebracht ist und an diesem ein plattenförmiges elastisches Teil 17 mit einer seismischen Masse 18 angebracht ist. Beim Auftreten einer Beschleunigung wird das Teil 17 durch die Trägheitskraft der Masse 18 gebogen. Die dem Faserende zugekehrte Seite des elastischen Teils 17 bildet die zweite Grenzfläche 15. Beide Grenzflächen bilden also ein zusammenhängendes Teil, das am Faserende befestigt ist. Die Masse 18 ist vorzugsweise auf eine kleine Fläche des Teils 17 konzentriert, und durch Anbringung dieser konzentrierten Masse nahe dem Befestigungspunkt des elastischen Teils erzielt man eine mechanische Signalverstärkung im Sensor. Im Prinzip kann die Masse 18 auch gleichmässig über die Fläche des Teils 17 verteilt sein, was jedoch eine geringere Ansprechempfindlichkeit zur Folge hat. Die Grenzfläche 15 bewegt sich relativ zur Grenzfläche 16. Dadurch, dass die Grenzflächen 15 und 16 in Ruhestellung einen Winkel $\theta$ mit der Senkrechten zur Hauptachse der Faser bilden, werden bestimmte Strahlen (20, 23) nach ihrer Reflexion an der Grenzfläche 15 aus der Faser herausgeleitet, während andere Strahlen durch Totalreflexion auf bekannte Weise in die Faser zurückgeleitet werden (Strahlen 19, 22). Der Winke $\theta$ kann so bemessen werden, dass ungefähr die Hälfte des reflektierten Lichtes aus der Faser herausgeleitet wird. Dieser Anteil wird gegenüber Änderungen des Winkels $\theta'$ sehr empfindlich, die durch die relative Bewegung zwischen den Grenzflächen 15 und 16 auftreten. Der elastische Teil 17 des Körpers 2 enthält ein fotolumineszierendes Material, das Lumineszenzlicht erzeugt, dessen Wellenlänge grösser ist als die des Anregungslichtes. Die Richtungsabhängigkeit der Lumineszenzstrahlung wird durch den ankommenden Strahl 21 und das erzeugte Strahlenbündel 24 veranschaulicht, dessen Verteilung dem Lambert'schen Gesetz mit verhältnismässig schwacher Richtungsabhängigkeit folgt. Die Arbeitsweise des Sensors ist also dadurch bestimmt, dass das reflektierte Licht stark von der Messgrösse abhängig ist, im vorliegenden Falle von der Beschleunigung, während das Lumineszenzlicht im wesentlichen von der Messgrösse unabhängig ist. Der Körper 2 ist in dem gezeigten Ausführungsbeispiel als Halbleiterkörper mit Epitaxialschichten ausgebildet, zum Beispiel $Al_xGa_{1-x}As$, wobei x in gewissen Schichten 0 und in anderen Schichten 0,3 bis 0,5 beträgt. Bei dem Halbleitermaterial kann es sich auch um $In_xGa_{1-x}P_{1-y}$ handeln. Durch Veränderung des Al-Gehaltes werden die Energiebandbreite, die Lumineszenzeigenschaften und die Widerstandsfähigkeit des Materials gegen chemische Einwirkungen beeinflusst. Es ist somit möglich, durch chemische Ätzung und fotolithografische Mustertechnik dreidimensional geformte Körper mit elastischen und optischen Eigenschaften herzustellen, wie sie vorstehend beschrieben worden sind.

**Patentansprüche**

1. Faseroptischer Sensor zur Messung von Bewegungen zwischen zwei Grenzflächen (15, 16), von denen die eine (16) die Endfläche einer optischen Faser (1) und die andere (15) die Fläche eines sich entsprechend der zu messenden Bewegung bewegenden Körpers (2) ist, wobei die optische Faser (1) optische Energie zu ihrer Grenzfläche (16) und der Grenzfläche (15) des beweglichen Körpers (2) hinleitet und von diesen Grenzflächen zurückleitet, wobei mindestens eine der Grenzflächen (15, 16) eine Schicht aus fotolumineszierendem Material enthält, das sich über die ganze oder einen abgrenzenden Teil dieser Grenzfläche erstreckt, und wobei der Sensor so aufgebaut ist, dass die von der Grenzfläche (15) des Körpers (2) reflektierte optische Energie von der relativen Lage zwischen den Grenzflächen (15, 16) abhängig ist, dadurch gekennzeichnet, dass der Körper (2) mit der Faser (1) fest verbunden ist und einen elastischen Teil (17) enthält, der eine Relativbewegung zwischen den Grenzflächen (15, 16) ermöglicht, und dass mindestens eine der Grenzflächen (15, 16) einen Winkel (θ) mit der Längsrichtung der Faser (1) bildet, der von 90° abweicht.

2. Faseroptischer Sensor nach Anspruch 1, dadurch gekennzeichnet, dass er so aufgebaut ist, dass die relative Lage zwischen der Faser (1) und dem Körper (2) die Übertragung derjenigen optischen Energie von den Grenzflächen (15, 16) zurück in die Faser bestimmt, die von der Reflexion herrührt, und dass das Fotolumineszenzlicht im wesentlichen von der Messgrösse unabhängig ist.

3. Faseroptischer Sensor nach Anspruch 1, dadurch gekennzeichnet, dass er so aufgebaut ist, dass die relative Lage zwischen der Faser (1) und dem Körper (2) die Übertragung des reflektierten Lichtes und des Fotolumineszenzlichtes zurück in die Faser (1) beeinflusst, wobei der Grad der Beeinflussung für das letztgenannte Licht erheblich kleiner als für das erstgenannte Licht ist.

4. Faseroptischer Sensor nach einem der vorhergehenden Ansprüche, dadurch gekennzeichnet, dass die in die Faser (1) zurückgeleitete optische Energie mit Hilfe mindestens eines optischen Filters (10) aufgeteilt wird in eine erste Komponente, die im wesentlichen nur von der reflektierten optischen Energie herrührt, und in eine zweite Komponente, die im wesentlichen nur von dem Fotolumineszenzlicht herrührt.

5. Faseroptischer Sensor nach einem der vorhergehenden Ansprüche, dadurch gekennzeichnet, dass das aus der reflektierten optischen Energie gewonnene elektrische Signal ein elektronisches Hochpassfilter (8) oder ein elektronisches Bandpassfilter passiert.

6. Faseroptischer Sensor nach einem der vorhergehenden Ansprüche, dadurch gekennzeichnet, dass das aus dem Fotolumineszenzlicht gewonnene elektrische Signal als Istwert einem Regelkreis (12, 13, 14, 5) zugeführt wird zur Steuerung der der Faser (1) von einer Leuchtdiode (5) zugeführten optischen Energie.

7. Faseroptischer Sensor nach einem der Ansprüche 1 bis 5, dadurch gekennzeichnet, dass aus je einer Signalkomponente der reflektierten optischen Energie und des Fotolumineszenzlichtes nach deren Umwandlung in elektrische Signale in einem Divisionsglied der Quotient gebildet wird.

8. Faseroptischer Sensor nach einem der vorhergehenden Ansprüche, dadurch gekennzeichnet, dass der Körper (2) einen elastischen Teil (17) und eine mit diesem verbundende konzentrierte Masse (18) enthält.

9. Faseroptischer Sensor nach einem der vorhergehenden Ansprüche, dadurch gekennzeichnet, dass der Körper (2) aus einem Halbleitermaterial, zum Beispiel $Al_xGa_{1-x}As$ oder $In_xGa_{1-x}As_yP_{1-y}$, besteht.

10. Faseroptischer Sensor nach Anspruch 9, dadurch gekennzeichnet, dass das Halbleitermaterial mit Epitaxialschichten versehen ist.

11. Faseroptischer Sensor nach einem der vorhergehenden Ansprüche, dadurch gekennzeichnet, dass die Faserendfläche mit fotolumineszierendem Material belegt ist.

12. Faseroptischer Sensor nach einem der vorhergehenden Ansprüche, dadurch gekennzeichnet, dass die optische Faser nahe ihrer Endfläche (16) im Strahlengang des Anregungslichtes liegendes fotolumineszierendes Material enthält.

13. Faseroptischer Sensor nach einem der vorhergehenden Ansprüche, dadurch gekennzeichnet, dass es sich bei dem fotolumineszierenden Material um Metallionen handelt.

14. Faseroptischer Sensor nach einem der Ansprüche 8 bis 13, dadurch gekennzeichnet, dass die Masse (18) auf einem kleinen Teil der Grenzfläche (15) des Körpers (2) konzentriert ist.

**Claims**

1. Fibre-optical sensor for measuring movements between two boundary surfaces (15, 16) one (16) being formed by the end surfaces of an optical fibre (1) and the other one (15) by the surface of a body (2) performing movements according to the movements to be measured, the optical fibre (1) being adapted to transmit optical energy to its boundary surface (16) and the boundary surface (15) of the moving body (2) and to retransmit optical energy from these boundary surfaces, with at least one of said boundary surfaces (15, 16) comprising a layer of photo-luminescent material extending over the total or a delimited portion of said boundary surface, and with the sensor constructed such that the optical energy which is deflected from the boundary surface (15) of the body (2) is dependent upon the relative position between said boundary surfaces (15, 16), characterized in that the body (2) is rigidly secured to said fibre (1) and comprises an elastic element (17) permitting relative movement between the two boundary surfaces (15, 16), and that at least one of said boundary surfaces (15, 16) makes an angle ($\theta$) with the longitudinal direction of the fibre (1) different from 90°.

2. Fibre-optical sensor according to Claim 1, characterized in that the sensor is constructed in such a way that the relative position between the fibre (1) and the body (2) determines the transmission, back from the boundary surfaces (15, 16) into the fibre, of that part of the optical energy, which is due to reflections, and that the photo-luminescent light is substantially independent on the measuring quantity.

3. Fibre-optical sensor according to Claim 1, characterized in that the sensor is constructed in such a way that the relative position between the fibre (1) and the body (2) influences the transmission of the reflected light and the photo-luminescent light back into the fibre (1), the level of this influence being considerably smaller on the last-mentioned light than on the first-mentioned light.

4. Fibre-optical sensor according to any of the preceding claims, characterized in that the optical energy re-supplied into the fibre (1) is split up, with the aid of at least one optical filter (10), in a first component essentially originating exclusively from the reflected optical energy and in a second component essentially originating exclusively from the photo-luminescent light.

5. Fibre-optical sensor according to any of the preceding claims, characterized in that the electric signal obtained from the reflected optical energy is passed through an electronic high-pass filter (8) or an electronic band-pass filter.

6. Fibre-optical sensor according to any of the preceding claims, characterized in that the electrical signal obtained from said photo-luminescent light is used as the actual value in a regulation loop (12, 13, 14, 5) for controlling the optical energy supplied to the fibre (1) by a light emitting diode (5).

7. Fibre-optical sensor according to any of Claims 1 to 5, characterized in that in a division circuit a quotient is formed between a signal component of the reflected optical energy and a signal component of the photo-luminescent light after these signals have been converted into electrical signals.

8. Fibre-optical sensor according to any of the preceding claims, characterized in that the elastic member (17) of the body (2) includes a concentrated seismic mass (18) secured thereon.

9. Fibre-optical sensor according to any of the preceding claims, characterized in that the body (2) consists of semiconductor material such as $Al_xGa_{1-x}As$ or $In_xGa_{1-x}As_yP_{1-y}$.

10. Fibre-optical sensor according to Claim 9, characterized in that the semiconductor material is provided with epitaxial layers.

11. Fibre-optical sensor according to any of the preceding claims, characterized in that the end surface of the fibre is coated with photo-luminescent material.

12. Fibre-optical sensor according to any of the preceding claims, characterized in that the optical fibre, near its end surface (16), contains photo-luminescent material arranged in the travel path of the excitation light.

13. Fibre-optical sensor according to any of the preceding claims, characterized in that the photo-luminescent material consists of metal-ions.

14. Fibre-optical sensor according to any of Claims 8 to 13, characterized in that said seismic mass (18) is concentrated on a small section of the boundary layer (15) of the body (2).

## Revendications

1. Capteur à fibres optiques pour mesurer les déplacements entre deux surfaces limites (15, 16) dont l'une (16) est la surface d'extrémité d'une fibre optique (1) et dont l'autre est la surface d'un corps (2) qui se déplace en fonction du déplacement à mesurer, du type dans lequel la fibre optique (1) envoie une énergie optique vers sa surface limite (16) et vers la surface limite (15) du corps mobile (2) et la renvoie en retour à partir de ces surfaces limites, l'une au moins de ces surfaces limites (15, 16) comportant une couche d'une matière photoluminescente qui s'étend sur la totalité ou sur une partie délimitée de cette surface limite, alors que le capteur est constitué de telle manière que l'énergie optique réfléchie par la surface limite (15) du corps (2) dépend de la position relative entre les surfaces limites (15, 16), caractérisé par le fait que le corps (2) est relié de façon fixe avec la fibre (1) et comporte une partie élastique (17) qui autorise un mouvement relatif entre les surfaces limites (15, 16), et qu'au moins une des surfaces limites (15, 16) forme avec la direction longitudinale de la fibre (1), un angle ($\theta$) qui est différent de 90°.

2. Capteur à fibres optiques selon la revendication 1, caractérisé par le fait qu'il est constitué de telle manière que la position relative entre la fibre (1) et le corps (2) détermine le renvoi de l'énergie optique des surfaces limites (15, 16) dans la fibre optique et provenant de la réflexion, et que la lumière photoluminescent est, pour l'essentiel, indépendante de la grandeur de mesure.

3. Capteur à fibres optiques selon la revendication 1, caractérisé par le fait qu'il est constitué de telle manière que la position relative entre la fibre (1) et le corps (2) exerce une influence sur le renvoi de la lumière réfléchie et de la lumière photoluminescente dans la fibre (1), le degré de l'influence pour la lumière mentionnée en dernier lieu étant notablement plus faible que le degré de l'influence pour la lumière mentionnée en premier lieu.

4. Capteur à fibres optiques selon l'une des revendications précédentes, caractérisé par le fait que l'énergie optique renvoyée dans la fibre (1) est subdivisée, à l'aide d'au moins un filtre optique (10), en une première composante provenant sensiblement seulement de l'énergie optique réfléchie, et en une seconde composante provenant sensiblement que de la lumière photoluminescente.

5. Capteur à fibres optiques selon l'une des revendications précédentes, caractérisé par le fait que le signal électrique qui est obtenu à partir de l'énergie optique réfléchie, passe par un filtre électronique passe-haut (8) ou par un filtre électronique passe-bande.

6. Capteur à fibres optiques selon l'une des revendications précédentes, caractérisé par le fait que le signal électrique qui est obtenu à partir de la lumière photoluminescente est appliquée, en tant que valeur instantanée, à un circuit de régulation (12, 13, 14, 5) en vue de la commande de l'énergie optique fournie par une diode luminescente (5) à la fibre (1).

7. Capteur à fibres optiques selon l'une des revendications 1 à 5, caractérisé par le fait que l'on forme, avec une composante de signaux de l'énergie optique réfléchie et de la lumière photoluminescente, respectivement, et après leur transformation en signaux électriques, le quotient dans une unité de division.

8. Capteur à fibres optiques selon l'une des revendications précédentes, caractérisé par le fait que la partie élastique (17) du corps (2) comporte une masse concentrée (18) qui lui est reliée.

9. Capteur à fibres optiques selon l'une des revendications précédentes, caractérisé par le fait que le corps est constitué avec un matériau semiconducteur, par exemple $Al_xGa_{1-x}As$ ou $In_xGa_{1-x}As_yP_{1-y}$.

10. Capteur à fibres optiques selon la revendication 9, caractérisé par le fait que le matériau semiconducteur est pourvu de couches épitaxiales.

11. Capteur à fibres optiques selon l'une des revendications précédentes, caractérisé par le fait que la surface d'extrémité de la fibre est recouverte d'un matériau photoluminescent.

12. Capteur à fibres optiques selon l'une des revendications précédentes, caractérisé par le fait que la fibre optique comporte, près de sa surface d'extrémité (16) un matériau photoluminescent qui se situe dans la trajectoire de rayonnement de la lumière d'excitation.

13. Capteur à fibres optiques selon l'une des revendications précédentes, caractérisé par le fait qu'il s'agit, pour le matériau photoluminescent, d'ions métalliques.

14. Capteur à fibres optiques selon l'une des revendications 8 à 13, caractérisé par le fait que la masse (18) est concentrée sur une faible partie de la surface limite (15) du corps (2).

## FIG. 1

## FIG. 2